# EUROPÄISCHE PATENTSCHRIFT

(11) **EP 2 026 946 B1**
(45) Veröffentlichungstag und Bekanntmachung des Hinweises auf die Patenterteilung: **08.01.2014**
(21) Anmeldenummer: 07725447.2
(22) Anmeldetag: 23.05.2007
(51) Int. Cl.: B29C 45/27

(54) **HEISSKANALDÜSE ZUR ANORDNUNG IN EINEM SPRITZGIESSWERKZEUG**
HOT-RUNNER NOZZLE FOR ARRANGEMENT IN AN INJECTION MOULD
BUSE À CANAL CHAUD DEVANT ÊTRE DISPOSÉE DANS UN OUTIL DE MOULAGE PAR INJECTION

(30) Priorität: 08.06.2006 DE 102006026580
(43) Veröffentlichungstag der Anmeldung: 25.02.2009
(73) Patentinhaber: Günther Heisskanaltechnik GmbH, 35066 Frankenberg/Eder (DE)
(72) Erfinder: GÜNTHER, Herbert, 35108 Allendorf/Rennertehausen (DE)
(74) Vertreter: Grosse, Wolf-Dietrich Rüdiger
(86) Internationale Anmeldenummer: PCT/EP2007/004547
(87) Internationale Veröffentlichungsnummer: WO 2007/140878

(56) Entgegenhaltungen:
- EP-A1- 0 480 224
- WO-A-00/18559
- DE-A1- 3 523 826
- US-A- 6 009 616

## Beschreibung

Die Erfindung betrifft eine Heißkanaldüse zur Anordnung In einem Spritzgießwerkzeug, das in Abhängigkeit von der Konfiguration eine größere Anzahl von Platten aufweist und an seiner festen Werkzeugseite zumindest eine Rück- bzw. Werkzeugaufspannplatte sowie eine Verteilerplatte und an seiner trennbaren Formselte zumindest eine Kavitätenplatte besitzt, an deren Formnest eine Düsenspitze zum Einsatz kommt, wobei die Heißkanaldüse an ihrem von der Düsenspitze entfernten, hinteren Ende ein mit einem Gehäusebund versehenes, hohlkörperförmiges Flanschgehäuse besitzt, das ein Materialrohr mit einem in der Düsenspitze mündenden Strömungskanal für eine Materialschmelze aufnimmt, sowie mit Anschlüssen für eine Heizung und/oder Kühlung und für Temperaturmessfühler versehen Ist, wobei das Materialrohr an seinem hinteren Ende einstückig mit dem Flanschgehäuse an dessen Innenmantelfläche verbunden ist, wie aus der DE 35 23 826 A1 und der WO 00/18559 A bekannt, wobei nach der WO-Veröffentlichung das Materialrohr durch Verschrauben und nach der DE-Veröffentlichung durch Verlöten mit dem Flanschgehäuse verbunden ist.

Die Verbindung dieser beiden Bauteile durch Verlöten ist ebenfalls aus der US 6.009.616 A bekannt, während die EP 0 480 224 A1 das Verschweißen dieser ineinander gesteckten Teile offenbart.

Durch die DE 195 42 237 B4 ist eine Spritzgussdüse, ausgebildet als Helßkanaldüse mit einem integrierten elektrischen Heizelement und einer Mittelbohrung als Strömungskanal zur Förderung der thermoplastischen Schmelze bis zur Düsenspitze und anschließend in den Hohlraum einer gekühlten Form bzw. eines trennbaren Werkzeugblockes mit dem darin In einer Kavitätenplatte vorgesehenen Formnest bekannt geworden. Die Kavitätenplatte kann mit mehreren Formnestern und das Spritzgießwerkzeug mit entsprechend mehreren Spritzgussdüsen und diese ggf, auch mit mehreren, beispielsweise winklig angeordneten, Düsenspltzen versehen sein.

Die Heißkanaldüse umfasst einen verlängerten Mittelkörper, der in einer einstückigen Außenmuffe bzw. einem mit einem Flanschteil als Gehäusebund versehenen Flanschgehäuse sitzt. Der Mittelkörper weist an seinem verlängerten Mittelschaftteil an dessen rückwärtigen Ende einen weiteren Flansch bzw. Gehäusebund auf, der kleeblattförmig ausgebildet ist und formschlüssig in den entsprechend konturierten Gehäusebund bzw. Flansch der Außenmuffe bzw. des Flanschgehäuses eingreift. Die so durch Einstecken ineinander gebaute Spritzgussdüse wird mit dem rückwärtigen Flansch bzw. Gehäusebund in einen Sitz in einer Platte an der heißen Werkzeugseite angesetzt und verschraubt.

Eine aus der EP 0 528 315 B1 bekannte, andere Ausführung einer solchen Heißkanaldüse besteht aus einem mit seitlichen elektrischen Anschlüssen versehenen breiteren Flanschkörpar, der sich In einem von einem außen behelzten Materialrohr durchsetzten, schmaleren Schaft fortsetzt. Dieser ist mehrteilig und hat ein äußeres Hüllrohr mit einem oberen Bund zur Anlage beim Einbau in eine Formnestplatte. Das Materialrohr mit dem in Düsenspitzen mündenden Strömungskanal ist an seinem hinteren Ende mit einem schulterartigen Außenkragen ausgebildet, über den das Materialrohr mit dem Flanschkörper bzw. rohrkörperförmigen Flanschgehäuse durch Verschweißen an der Stoßstelle der sich aufeinander legenden Stirnflächen verbunden ist. Eine über das ausladende Schulterstück des Mantelrohres aufgesetzte Kappe bildet den hinteren Abschluss dieser Heißkanaldüse.

Bei einer aus der DE 100 04 072 C bekannten, in Spritzgießwerkzeugen eingesetzten Heißkanal- oder Kaltkanaldüse, um eine fließfähige Masse bei einer vorgebbaren Temperatur unter hohem Druck einem trennbaren Werkzeugblock (Formnest) zuzuführen, besitzt der Düsenkörper wenigstens eine im Wesentlichen ebene Seitenfläche, an der eine flächige Heiz- und/oder Kühlvorrichtung angebracht ist.

Der Erfindung liegt die Aufgabe zugrunde, eine gattungsgemäße Heißkanaldüse zu schaffen, die einen einfachen Aufbau besitzt und eine leichte Montage bzw. Demontage in das bzw. aus dem Formwerkzeug ermöglicht.

Diese Aufgabe wird erfindungsgemäß dadurch gelöst, dass das Mantelrohr durch einen Press-Sitz mit dem Flanschgehäuse verbunden ist. Es brauchen damit das Materialrohr und das Flanschgehäuse nicht mehr ineinander gesteckt bzw. -gefügt zu werden, vielmehr liegt beim Ein- und Ausbau eine feste Kompakteinheit vor.

Durch das Einpressen des Materialrohres in das hohlkörperförmige Flanschgehäuse am Ort des Geschehens, d.h. wo sich Außenmantelfläche des Materialrohres und Innenmantelfläche der Durchgangsbohrung des Flanschgehäuses konzentrisch aneinander legen, lässt sich eine sehr schmale Bauweise erreichen, die ohne rückwärtigen Kragen bzw. Gehäusebund, Schulterstück oder dgl. auskommt und keinen zusätzlichen Formschlusseingriff bzw. -sitz benötigt. Die KompaktDüseneinheit erfordert zum Ein- und Ausbau lediglich das Lösen der Steckanschlüsse für die Heizung und/oder Kühlung und die optlonalen Temperaturmessfühler, um dann als Gesamtheit einfach aus den Platten des Spritzgießwerkzeuges entnommen bzw. darin eingesetzt werden zu können.

Die kompakte Bauweise wird dadurch weiter begünstigt, dass erfindungsgemäß das Materialrohr von seinem düsenseitigen, vorderen Ende bis zu dem mit dem Flanschgehäuse stirnseitig abschließendem, hinteren Ende durchgehend absatzlos ausgebildet ist. Die Abmessung der kompakten Düseneinhelt mit dem einheitlich durchgehenden Materialrohr bestimmt sich somit allein von dem anforderungsbedingt einzuhaltenden Außendurchmesser des Materialrohres und des dieses mit Verpressung am rückwärtigen Ende konzentrisch umschließenden Flanschgehäuses. Unter absatzlos wird hierbei verstanden, daß für das Einpressen des Materialrohres in das Flanschgehäuse im Sitzbereich über die Länge eine engere Toleranz als im übrigen Bereich des Materialrohres eingehalten und ein minimaler (wenige 1/10 mm) Anschlag vorgesehen wird, der eine definierte Einpresstlefe des Materialrohres im Flanschgehäuse gewährleistet. Das gilt so vergleichbar auch für den vorderen Dichtungsbereich des Materialrohres.

Eine Ausgestaltung der Erfindung sieht zur Verbesserung der Temperaturführung vor, daß das Flanschgehäuse aus Titan besteht.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: in einem Teilquerschnitt eine in ein Spritzgleßwerkzeug eingebaute Spritzgussdüse, schematisch dargestellt; und
- Fig. 2: als Einzelheit in einem Längsschnitt eine als Heißkanaldüse ausgeführte Spritzgussdüse.

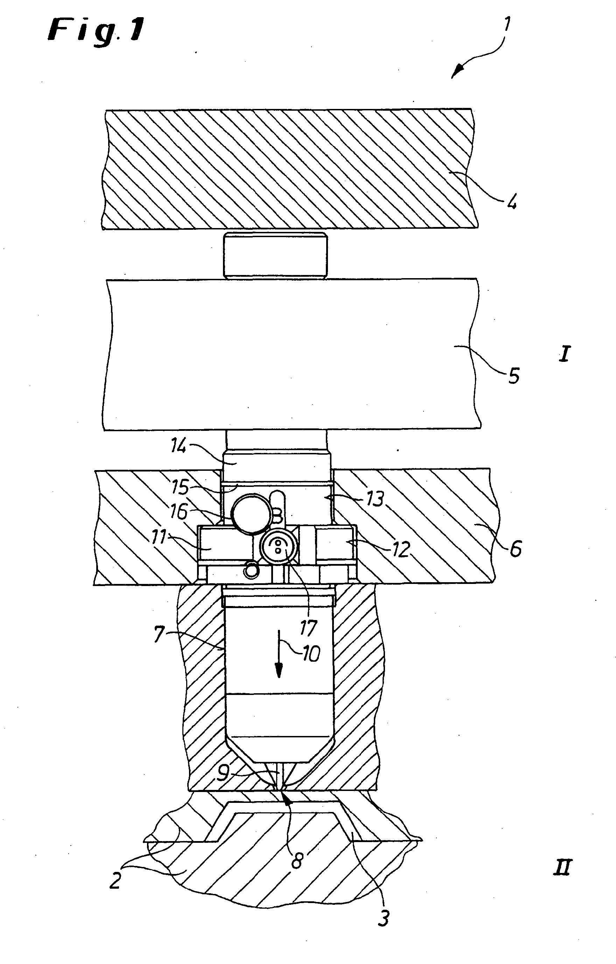

Ein in Fig. 1 dargestelltes Spritzgießwerkzeug 1 besteht an seiner festen Werkzeugseite I und an seiner einen trennbaren Werkzeugblock mit einer Kavitätenplatte 2 mit darin eingearbeitetem Formnest 3 aufweisenden Formseite II mehreren Platten. Von diesen sind an der festen Werkzeugseite I eine Rückplatte bzw. Werkzeugaufspannplatte 4, eine Verteilerplatte 5 mit nicht dargestellten Strömungskanälen und eine Rahmen- bzw. Zwischenplatte 6 gezeigt. Diese besitzt einen in einer Düsenspitze 8 mündenden Strömungskanal 9 für die in Spritzgießrichtung gemäß Pfeil 10 von der Verteilerplatte 5 zugeleitete Metallschmelze, die aus der Düsenspitze 8 heraus in das Formnest 3 der Kavitätenplatte 2 strömt.

Die Spritzguss- bzw. Heißkanaldüse 7 ist mit einem Gehäusebund 11 in eine nach vorne, in Spritzrichtung 10 offene Ausnehmung 12 der Zwischenplatte 6 eingesetzt. Die Ausnehmung 12 geht in eine Durchgangsbohrung 13 über, durch die hinaus das hintere Gehäuse-Ende 14 der Heißkanaldüse 7 mit Anschluss zur Verteilerplatte 5 ragt. Das hintere Gehäuse-Ende 14 ist mit einer Abdichtung in Form einer umlaufenden Dichtwulst 15 ausgebildet, die sich passgenau in die Durchgangsbohrung 13 der Ausnehmung 12 der Zwischenplatte 6 einfügt. Mit seitlicher Zuführung sind Steckanschlüsse für eine Heizung 16 und Temperaturmessfühler 17 vorgesehen.

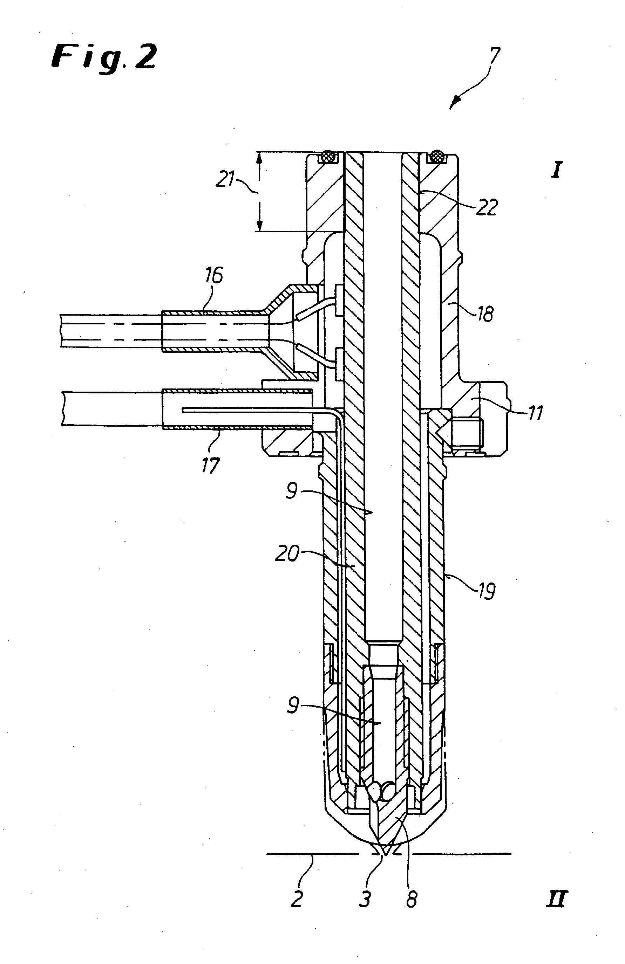

Die im Ausführungsbeispiel nach Fig. 2 dargestellte Heißkanaldüse 7 umfasst ein mit dem Gehäusebund 11 versehenes, hohlkörperförmiges Flanschgehäuse 18 und einen demgegenüber schlankeren bzw. im Durchmesser kleineren, sich nach vorne anschließenden, mit dem Flanschgehäuse 18 im Bereich des Gehäusebundes 11 verschraubten Schaft 19. Das Flanschgehäuse 18 und der Schaft 19 umschließen konzentrisch ein Materialrohr 20, das mit dem in der Düsenspitze 8 mündenden Strömungskanal 9 ausgebildet ist. Alternativ ist eine Bauweise ohne einen solchen Schaft 19 möglich, wozu dann das untere Ende des Materialrohres 20 selbst direkt abgedichtet in dem Werkzeug sitzen würde.

Das Materialrohr 20 ist ausgehend von seinem düsenseitigen, vorderen Ende bis zu dem mit dem Flanschgehäuse 18 stirnseitig bündig abschließenden, hinteren Ende durchgehend absatzlos ausgebildet und an diesem hinteren Ende über einen begrenzten Längenabschnitt 21 durch einen Press-Sitz 22 mit dem Flanschgehäuse 18 einstückig verbunden. Dies wird durch Einpressen der Außenmantelfläche des Materialrohres 22 und Verpressen mit der über den begrenzten Längenabschnitt 21 anliegenden Innenmantelfläche der Gehäusebohrung des Flanschgehäuses 18 erreicht.

Es liegt damit eine kleinbauende, kompakte Einheit vor, und zum Ein- bzw. Ausbau in das Spritzgießwerkzeug brauchen lediglich die Steckanschlüsse für die Heizung 16 und die Temperaturmessfühler 17 gelöst bzw. angekoppelt zu werden. Die Heißkanaldüse kann damit in einfacher Weise als Gesamteinheit montiert werden.

### Bezugszeichenliste

- 1: Spritzgießwerkzeug
- 2: Kavitätenplatte
- 3: Formnest
- 4: Werkzeugaufspannplatte
- 5: Verteilerplatte
- 6: Zwischenplatte
- 7: Spritzgussdüse / Heißkanaldüse
- 8: Düsenspitze
- 9: Strömungskanal
- 10: Spritzrichtung
- 11: Gehäusebund
- 12: Ausnehmung
- 13: Durchgangsbohrung
- 14: Hinteres Gehäuse-Ende
- 15: Dichtwulst
- 16: Heizungsanschluss
- 17: Temperaturmessfühleranschluss
- 18: Flanschgehäuse
- 19: Schaft
- 20: Materialrohr
- 21: Längenabschnitt
- 22: Press-Sitz
- I: Feste Werkzeugseite
- II: Formseite

## Patentansprüche

1. Heißkanaldüse (7) zur Anordnung in einem Spritzgießwerkzeug (1), das in Abhängigkeit von der Konfiguration eine größere Anzahl von Platten aufweist und an seiner festen Werkzeugseite (I) zumindest eine Rück- bzw. Werkzeugaufspannplatte (4) sowie eine Verteilerplatte (5) und an seiner trennbaren Formseite (II) zumindest eine Kavitätenplatte (2) besitzt, an deren Formnest (3) eine Düsenspitze (8) zum Einsatz kommt, wobei die Heißkanaldüse (7) an ihrem von der Düsenspitze (8) entferntenhinteren Ende ein mit einem Gehäusebund (11) versehenes, hohlkörperförmiges Flanschgehäuse (18) besitzt, das ein Materialrohr (20) mit einem in der Düsenspitze (8) mündenden Strömungskanal (9) für eine Materialschmelze aufnimmt, sowie mit Anschlüssen für eine Heizung (16) und/oder Kühlung und für Temperaturmessfühler (17) versehen ist, wobei das Materialrohr (20) an seinem hinteren Ende einstückig mit dem Flanschgehäuse (18) an dessen Innenmantelfläche verbunden ist,
**dadurch gekennzeichnet,**
**dass** das Materialrohr (20) durch einen Press-Sitz (22) mit dem Flanschgehäuse (18) verbunden ist.

2. Heißkanaldüse nach Anspruch 1,
**dadurch gekennzeichnet,**
**dass** das Materialrohr (20) von seinem düsenseitigen, vorderen Ende bis zu dem mit dem Flanschgehäuse (18) stirnseitig bündig abschließenden, hinteren Ende durchgehend absatzlos ausgebildet ist.

3. Heißkanaldüse nach Anspruch 1 oder 2,
**dadurch gekennzeichnet,**
**daß** das Flanschgehäuse (18) aus Titan besteht.

## Claims

1. A hot runner nozzle (7) for being arranged in an injection mould (1) that in dependence on the configuration features a greater number of plates and on its fixed mould side (I) has at least one respective back plate or platen (4), as well as a distribution plate (5), and on its separable mould side (II) has at least one cavity plate (2), on the mould cavity (3) of which a nozzle tip (8) is utilized, wherein the hot runner nozzle (7) features on its rear end or distant end referred to the nozzle tip (8) a flange housing (18) in the form of a hollow body that is provided with a housing collar (11) and receives a material pipe (20) with a flow channel (9) for a molten material that leads into the nozzle tip (8), wherein said flange housing is furthermore provided with connections for a heating system (16) and/or cooling system and for temperature sensors (17), and wherein the material pipe (20) is on its rear end integrally connected to the flange housing (18) on its inner surface area,
**characterized in**
**that** the material pipe (20) is connected to the flange housing (18) by means of an interference fit (22).

2. The hot runner nozzle according to Claim 1,
**characterized in**
**that** the material pipe (20) is realized without offset from its front end on the nozzle side to its rear end that ends flush with the flange housing (18) on the face side.

3. The hot runner nozzle according to Claim 1 or 2,
**characterized in**
**that** the flange housing (18) consists of titanium.

## Revendications

1. Buse de canal chauffant (7) à disposer dans un outil de moulage par injection (1) qui, en fonction de la configuration, présente un grand nombre de plaques et possède sur son côté outillage fixe (I) au moins une plaque de resserrage et de serrage d'outil (4), de même qu'une plaque de répartition (5), et sur son côté moulage dissociable (II) au moins une plaque à cavité (2) dans le creux de moulage (3) de laquelle une pointe de buse (8) est utilisée, la buse de canal chauffant (7) présentant à son extrémité arrière éloignée de la pointe de buse (8) un boîtier bridé (18) en forme de corps creux pourvu d'un col de boîtier (11) et recevant un tuyau à matière (20) pourvu d'un canal d'écoulement (9) débouchant dans la pointe de buse (8) pour une coulée de matière ainsi que des raccordements pour un chauffage (16) et/ou refroidisseur et pour des sondes de température (17), le tuyau à matière (20) étant relié en un seul bloc par son extrémité arrière au boîtier bridé (18) au niveau de sa surface de chemise intérieure,
**caractérisée en ce que**
le tuyau à matière (20) est relié au boîtier bridé (18) par un ajustement serré (22).

2. Buse de canal chauffant selon la revendication 1,
**caractérisée en ce que**
le tuyau à matière (20), de son extrémité avant située côté buse à son extrémité arrière se terminant à ras du boîtier bridé (18) sur la face frontale, est réalisé en continu sans talon.

3. Buse de canal chauffant selon la revendication 1 ou 2,
**caractérisée en ce que**
le boîtier bridé (18) est en titane.
